# EUROPEAN PATENT APPLICATION

(11) **EP 2 405 321 A2**
(43) Date of publication of application: **11.01.2012**
(21) Application number: 11005563.9
(22) Date of filing: 07.07.2011
(51) Int. Cl.: G06F 1/20

(54) **Directional thermal siphon type heat column**

(30) Priority: 08.07.2010 TW 989122543
(71) Applicant: YAO, Ming-Huei, New Taipei 23441 (TW)
(72) Inventor: YAO, Ming-Huei, New Taipei 23441 (TW)
(74) Representative: Zeitler - Volpert - Kandlbinder

(57) **Abstract**

A directional thermal siphon type heat column 1 comprises: a column body 12 which is a sealed hollow cavity formed by a lid 14 and a base 10 and contains a liquid 40; and at least one partition element 26, being a hood plate fixed into the column body 12 and extended obliquely towards the base 10 and having a first channel A formed on a side of the partition element 26 opposite to the base 10 and a second channel B formed on one side of the partition element 26 opposite to the lid 14, so as to avoid an opposite flushing occurred while the liquid 40 inside the heat column 1 is having a liquid/vapor phase change and prevent affecting the heat dissipation and circulation operation efficiency.

## Description

### BACKGROUND OF THE INVENTION

### 1. Field of the Invention:

The present invention relates to a heat column, and more particularly to a heat dissipating structure, in particular to the heat column with good thermal conduction and heat dissipation effects.

### 2. Brief Description of the Related Art:

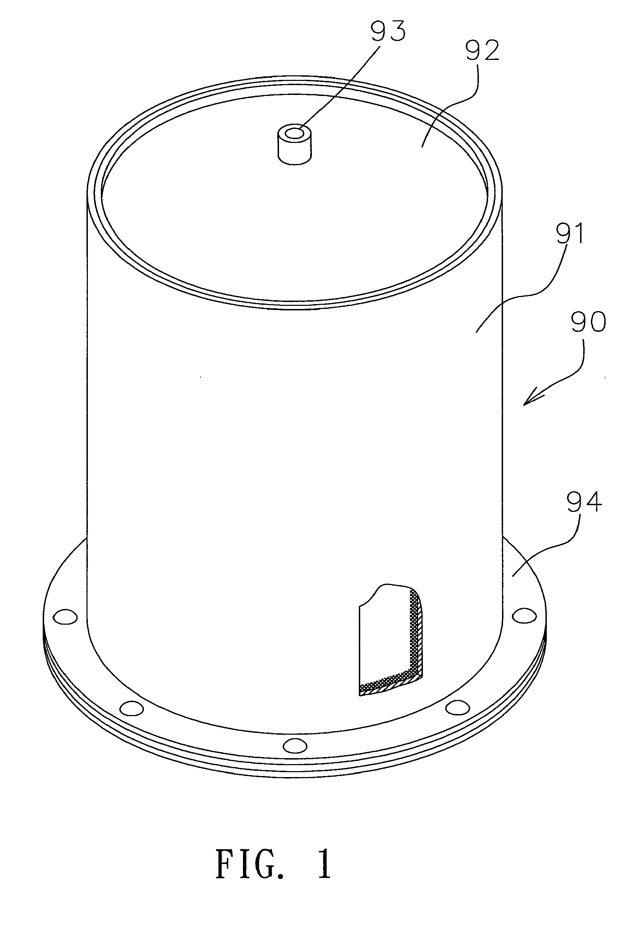

As the technologies of computers, electronics and optoelectronics advance rapidly, the CPU performance of the computers is enhanced significantly, resulting in the production of a larger heat source, so that it is necessary to provide a heat dissipating measure to overcome the heat dissipation problem. The development and application of light emitting diodes (LED become important subjects of the illumination industry, and the life and function of the LED are important factors for a good heat dissipating measure which are also the major problems of the present LED development and application. At present, heat dissipating technologies including heat dissipations by fins, fans, heat pipes and vapor chambers are developed and extensively used, wherein a heat column is one of the best heat dissipating technologies. Basically, the heat column is sealed cavity containing an operating liquid, and the operating liquid inside the sealed cavity is circulated continuously for a liquid/vapor phase change and the vapor/liquid fluid flows back and forth between a heat absorbing end and a heat discharging end, so that a uniform temperature at the surface of the cavity can be reached quickly to achieve the thermal conduction effect. With reference to FIG. 1 for a schematic view of a conventional heat column, the heat column 90 comprises a hollow column body 91, a lid 92 covered onto the top of the column body 91, a filling receptacle 93 formed on the lid 92 and provided for filling a liquid into the column body 91, and finally the heat column 90 is sealed. The column body 91 includes a contact surface 94 disposed at the bottom of the column body 91 contacted with a heat source, and the heat column is operated an operating mechanism as describe below. A liquid at a heat absorbing end (which is the contact surface 94) is vaporized into vapor to form an air flow. Now, a local pressure is produced inside the column body 91 to drive the vapor to flow towards a heat discharging end (such as lid 92 or the internal wall of the column body 91), and the vapor is operated at the contact area of the heat discharging end and condensed into a liquid phase, and then the liquid loops back to the heat absorbing end (which is the contact surface 94) for circulation and heat dissipation through a natural phenomenon of a gravity/capillary siphon by a metal crystal, a metal powder sintered lump or a copper mesh on the internal wall of the column body 91.

Although the heat column 90 can achieve the effect of the heat dissipation and circulation by means of the crystal, sintered lump or copper mesh on the internal wall of the column body 91 and changing the liquid/vapor phase to cool the vapor and liquid through the natural phenomenon of the gravity/capillary siphon, yet there is no appropriate partition of space in the column body 91, so that the air flow formed by the vaporized liquid descends when encountering the lid 92, and the descended airflow and the rising airflow constitute an opposite flushing, and a smooth circulation operation or a good heat dissipation effect cannot be achieved. Obviously, the conventional heat column requires improvements. Therefore, it is an important subject for related manufacturers to overcome the drawbacks of the conventional heat column.

In view of the foregoing drawbacks of the applications of the conventional heat column, the inventor of the present invention based on years of experience in the related industry to conduct extensive researches and experiments, and finally developed a directional thermal siphon type heat column with smoother operation and better heat dissipation effects to overcome the drawbacks of the prior art.

### SUMMARY OF THE INVENTION

Therefore, it is a primary objective of the present invention to provide a directional thermal siphon type heat column with smooth heat dissipation and circulation operations inside the heat column and an excellent path of guiding a heat source to improve the heat dissipation performance significantly.

To achieve the aforementioned objective, the present invention provides a technical measure, comprising: a column body, being a sealed hollow cavity formed by a lid and a base, and provided for containing a liquid therein; and a partition element, being a hood plate obliquely extended towards the partition element, and fixed into the column body, and the partition element comprising a first channel formed on a side of the partition element opposite to the base, and a second channel formed on another side of the partition element opposite to the lid.

The technical contents of the present invention will become apparent by the detailed description of the preferred embodiments together with the illustration of related drawings as follows:

### BRIEF DESCRIPTION OF THE INVENTION

Fig. 1 is a perspective view of a conventional heat column;
Fig. 2 is an exploded view of a first preferred embodiment of the present invention;
Fig. 3 is a cross-sectional view of the first preferred embodiment of the present invention;
Fig. 4 is a schematic view of an operation of the heat column in accordance with the first preferred embodiment of the present invention;
Fig. 5 is a schematic view of a second preferred embodiment t of the present invention;
Fig. 6 is an exploded view of a third preferred embodiment t of the present invention;
Fig. 7 is a cross-sectional view of a third preferred embodiment t of the present invention; and
Fig. 8 is a cross-sectional view of a fourth preferred embodiment t of the present invention.

### DETAILED DESCRIPTION OF THE PREFERRED EMBODIMENTS

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

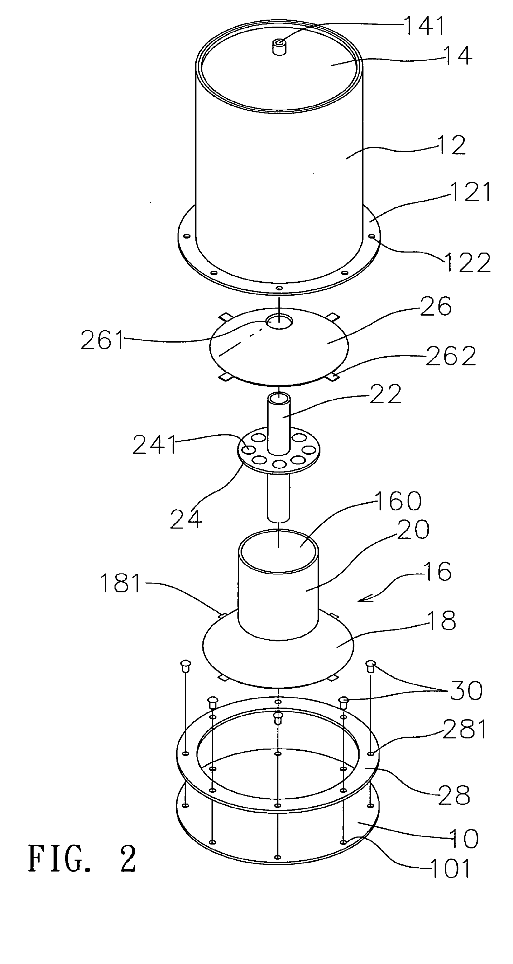

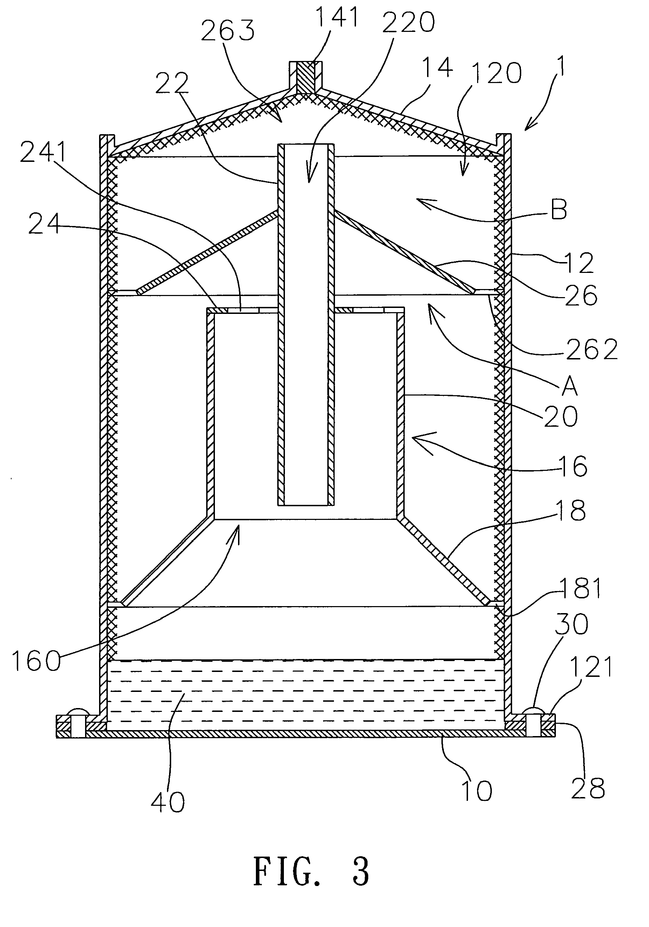

With reference to Figs. 2 and 3 for a directional thermal siphon type heat column in accordance with a first preferred embodiment of the present invention, the heat column 1 comprises a column body 12, a guide element 16 and a partition element 26, wherein the column body 12 is a hollow cavity; in other words, the column body 12 includes an operating space 120 therein, and a capillary structure such as a metal crystal, a metal powder sintered lumps, a copper mesh, a tube or a mesh tube is formed on a surface of the internal wall of the operating space 120 of the column body 12, and a connecting edge 121 is protruded from the bottom of the column body 12 (wherein the up, down, front and rear directions referred in the description of the present invention are used for the purpose of illustrating the invention only, but not intended for limiting the configuration of the invention in an erect position), and the connecting edge 121 includes a plurality of fixing holes 122 formed thereon, and a lid 14 is covered to the top of the column body 12, and the lid 14 includes a filling receptacle 141 for filling a liquid 40 into the column body 12. Finally, the column body 12 is vacuumed and sealed. In one embodiment, the surface of the internal wall of the lid 14 also has the same capillary structure formed on the internal wall of the column body 12, and the lid 14 is tilted downward to facilitate guiding the airflow towards the column body 12, and a base 10 and an insulation gasket 28 (which is a hollow plate corresponding to the base in this preferred embodiment) include a plurality of fixing holes 101, 281 formed around the peripheries of the base 10 and the insulation gasket 28. During an assembling process, the insulation gasket 28 is installed between the connecting edge 121 of the column body 12 and the base 10 and fixed into the fixing holes 122, 101 by a plurality of fasteners 30 (such as bolts) 281, so that the column body 12 and the base 10 are combined to form a sealed space of the column body for containing a liquid 40.

The guide element 16 is fixed into the operating space 120 of the column body 12, and the guide element 16 includes an expanding circular portion 18 at the bottom and a guided ascending portion 20 at the top, and the expanding circular portion 18 is a circular plate slightly extended downward, and the width of the bottom of the expanding circular portion 18 is slightly smaller than the internal diameter of the column body 12 in this preferred embodiment, and the expanding circular portion 18 has a plurality of separately protruded positioning plates 181 installed at the bottom periphery of the expanding circular portion 18, and the positioning plate 181 (or another fixing method) is fixed onto the internal wall of the column body 12. The guided ascending portion 20 is a substantially vertical cylindrical plate, and a top plate 24 is installed at the top of the guided ascending portion 20, and a middle tube 22 is penetrated through the top plate 24 and includes a plurality of through holes 241 formed at the periphery of the middle tube 22 and disposed apart from one another, and the guide element 16 becomes a penetrating guide space 160, wherein a guided passing space 220 is formed inside the middle tube 22.

The partition element 26 is fixed into the operating space 120 of the column body 12 and disposed at the top of the guide element 16, and the partition element 26 has a through hole 261 formed at the top, such that the whole partition element 26 is a hood plate expanded obliquely towards the base 10 to facilitate guiding an airflow towards the column body 12, and the partition element 26 has a bottom with a width slightly smaller than the internal diameter of the column body 12 in this preferred embodiment, and the partition element 26 includes a plurality of separately protruded positioning plates 262 installed at the bottom periphery of the partition element 26. The positioning plate 262 (or another fixing method) is fixed to the internal wall of the column body 12. After the partition element 26 is positioned and assembled, the middle tube 22 is penetrated through and protruded from the through hole 261 of the partition element 26, and a circulation space 263 is formed between the top of the middle tube 22 and the lid 14, and the bottom of the middle tube 22 is disposed inside the guide space 160 of the guide element 16, and preferably situated at the bottom of the guided ascending portion 20. In addition, a first channel A is formed between the partition element 26 and the guide element 16 and led to the internal wall of the column body 12, and a second channel B is formed between the lid 14 and the partition element 26 and led to the internal wall of the column body 12, and the plurality of partition elements 26 can be installed into the column body 12.

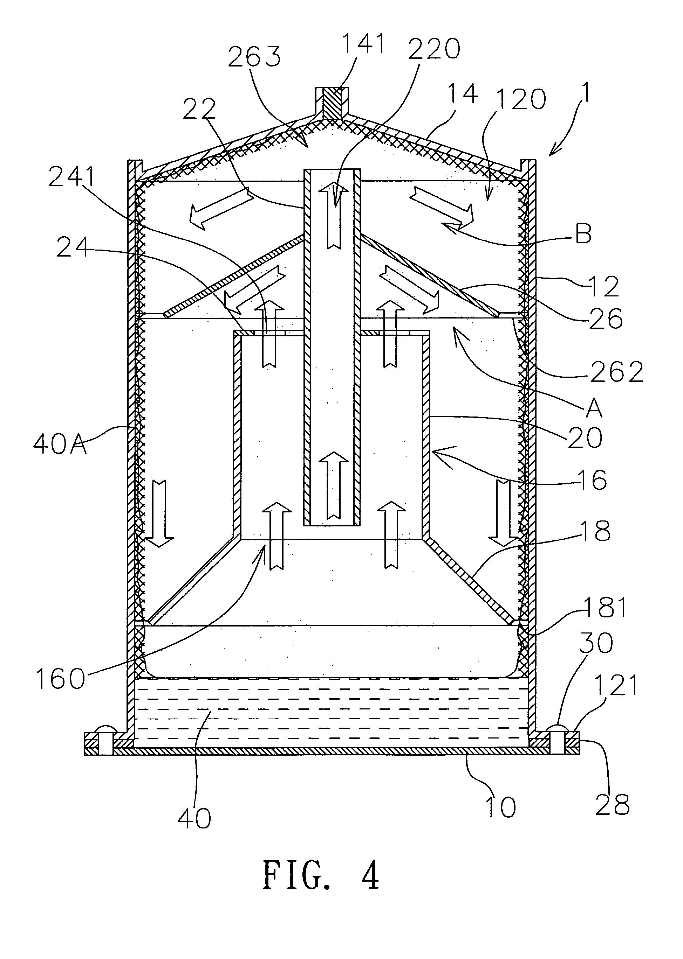

In Fig. 4, when the directional thermal siphon type heat column of the present invention is operated, the base 10 of the column body 12 is contacted with a heat source, so that the liquid 40 can absorb heat, and an airflow of the vaporized liquid 40 will rise and a portion of the airflow is passed to the partition element 26 through the guide space 160 of the guide element 16 and the plurality of through holes 241 of the top plate 24, and a portion of the airflow flows along the first channel A of the partition element 26 and obliquely downward to contact with the internal wall of the column body 12 to start the condensation and capillary (siphon) backflow action, so that the liquefied liquid 40 can achieve the heat absorbing and cooling effects. The other portion of the airflow of the vaporized liquid 40 is passed through the guided passing space 220 of the middle tube 22 to the circulation space 263 under the lid 14, and the other portion of the airflow flows along the second channel B of the lid 14 and obliquely downward to contact with the internal wall at the top of the column body 12 to start the condensation and capillary (siphon) backflow action, so that the airflow of the vaporized liquid 40 can be divided without causing any opposite flushing phenomenon to provide a smooth heat dissipation and circulation operation and improve the heat dissipating efficiency significantly.

Since the internal wall of the column body 12 acts as a main area for the condensation, therefore the external wall of column body 12 in contact with the outside must be maintained at a low temperature condition, and the insulation gasket 28 installed between the column body 12 and the base 10 can prevent the heat source from passing through the path formed by the base 10, the fastener 30 and the connecting edge 121 or increasing the temperature of the external wall of the column body 12, so as to overcome the drawbacks of lowering the heat dissipating efficiency.

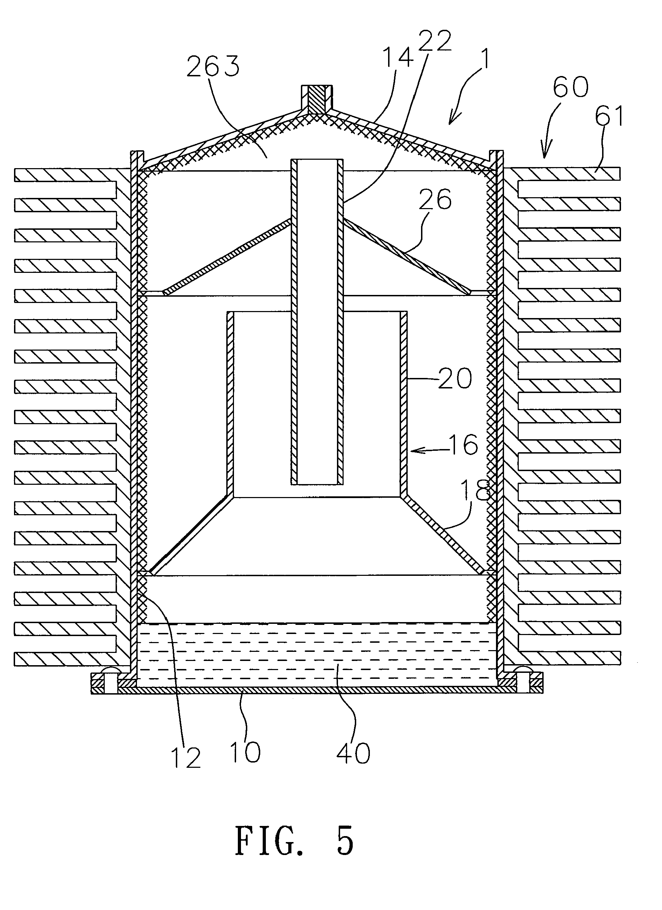

With reference to Fig. 5 for a schematic view of a directional thermal siphon type heat column in accordance with the second preferred embodiment of the present invention, this preferred embodiment is based on the structure of the first preferred embodiment, and a modification is made. The second referred embodiment further comprises an accessory heat sink 60 sheathed on an external side of the column body 12, and the accessory heat sink 60 includes a plurality of heat dissipating fins 61 for dissipating heat from an external wall of the column body 12.

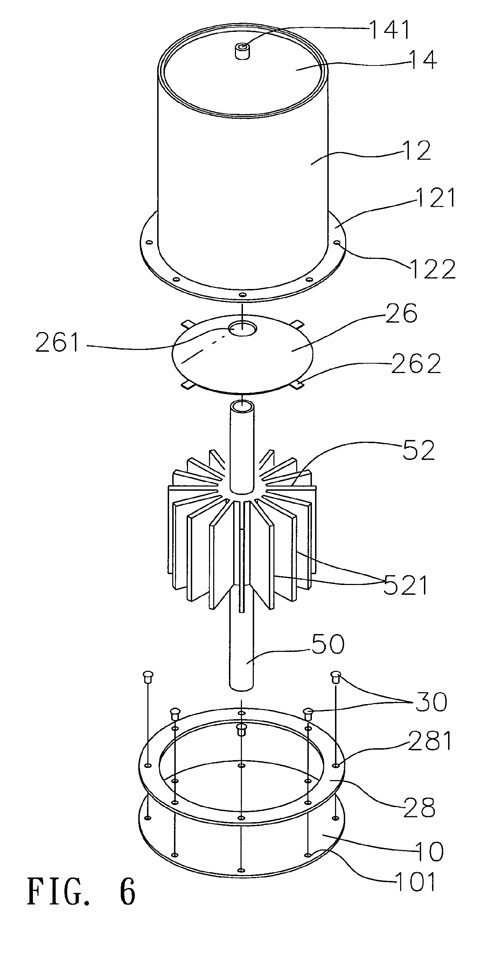

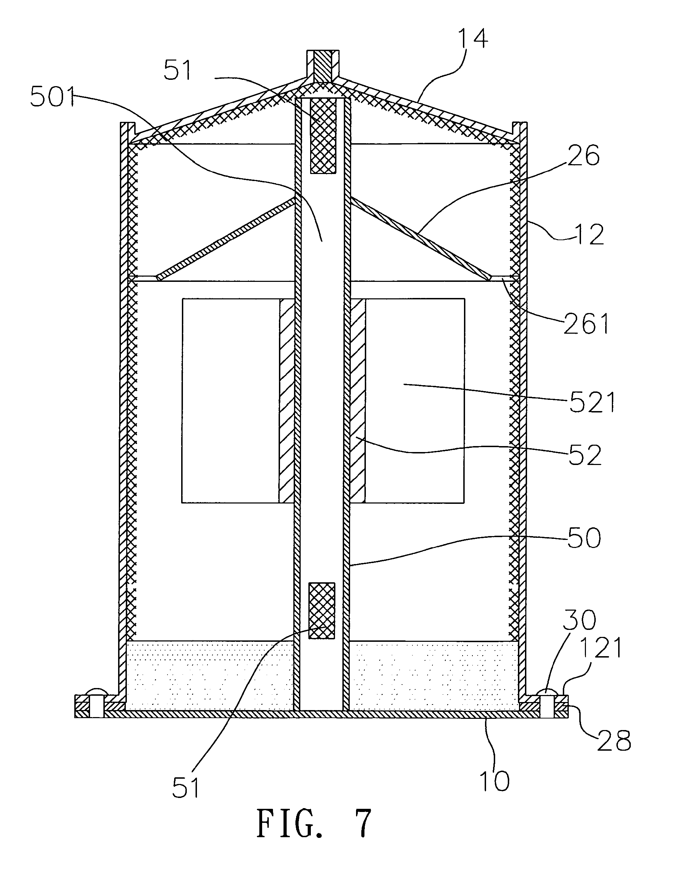

With reference to Figs. 6 and 7 for schematic views of a directional thermal siphon type heat column in accordance with the third preferred embodiment of the present invention, this preferred embodiment is based on the structure with the column body 12 and the partition element 26 according to the first preferred embodiment, and a modification is made. The third preferred embodiment further comprises a middle tube 50 penetrated through the through hole 261 of the partition element 26 and abutted and positioned between the base 10 and the lid 14. The middle tube 50 includes a heat dissipating element 52 installed below the partition element 26, and the heat dissipating element 52 includes a plurality of heat dissipating fins 521 for guiding the air flow of the vaporized liquid 40 to improve the heat dissipation and circulation efficiency. In addition, the middle tube 50 includes a plurality of penetrating holes 51 formed at both upper and lower ends of the middle tube 50, so that the airflow of the vaporized liquid 40 can pass through the penetrating hole 51 at the lower end and enter into a guided passing space 501 of the middle tube 50 and then into the second channel B from the penetrating hole 51 at the upper end.

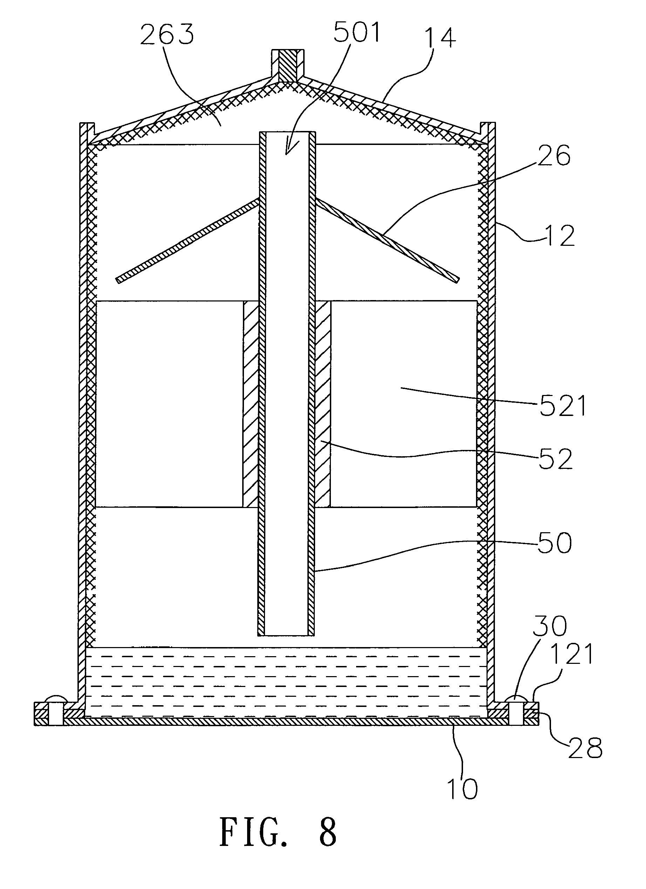

With reference to Fig. 8 for a schematic view of a directional thermal siphon type heat column in accordance with the fourth preferred embodiment of the present invention, this preferred embodiment is based on the structure with the column body 12, the partition element 26, the middle tube 50 and the heat dissipating element 52 according to the third preferred embodiment, and a modification is made, wherein the middle tube 50 is penetrated through the through hole 261 of the partition element 26, and an appropriate distance from both ends of the middle tube 50 to the base 10 and the lid 14 respectively is maintained, and the partition element 26 includes a plurality of heat dissipating fins 521 installed below and abutted against an internal wall of the column body 12 for supporting the partition element 26 to be fixed into the column body 12.

In summation of the description above, the present invention complies with the patent application requirements, and is thus duly filed for patent application. While the invention has been described with reference to a preferred embodiment thereof, it is to be understood that modifications or variations may be easily made without departing from the spirit of this invention, which is defined in the appended claims.

## Claims

1. A directional thermal siphon type heat column 1, comprising:
a column body 12, being a sealed hollow cavity formed by a lid 14 and a base 10, and provided for containing a liquid 40 therein; and
a partition element 26, being a hood plate obliquely extended towards the partition element 26, and fixed into the column body 12, and the partition element 26 comprising a first channel A formed on a side of the partition element 26 opposite to the base 10, and a second channel B formed on another side of the partition element 26 opposite to the lid 14.

2. The directional thermal siphon type heat column 1 according to claim 1, wherein the internal wall of the column body 12 or the inner side of the lid 14 has a capillary structure comprised of a metal crystal, a metal powder sintered lump, a copper mesh, a groove tube, or a mesh tube.

3. The directional thermal siphon type heat column 1 according to claim 1, further comprising an insulation gasket 28 installed between the bottom periphery of the column body 12 and the base 10 for preventing a heat source from passing through the base 10 or increasing the temperature of the column body 12.

4. The directional thermal siphon type heat column 1 according to claim 1, wherein the partition element 26 further includes a through hole 261 formed thereon for passing a middle tube 22.

5. The directional thermal siphon type heat column 1 according to claim 4, wherein the column body 12 further includes a guide element 16 fixed into the column body 12 and disposed between the partition element 26 and the base 10, and the guide element 16 includes a top plate 24 installed at an end of the guide element 16 opposite to the lid 14 for passing the middle tube 22, and the top plate 24 includes a plurality of through holes 241, 261, such that the guide element 16 becomes a penetrating guide space 160.

6. The directional thermal siphon type heat column 1 according to claim 5, wherein the guide element 16 includes an expanding circular portion 18 and a guided ascending portion 20, both disposed opposite to the base 10.

7. The directional thermal siphon type heat column 1 according to claim 6, wherein the expanding circular portion 18 is a circular plate extended obliquely towards the base 10, and the expanding circular portion 18 has a bottom with a width slightly smaller than the internal diameter of the column body 12, and the expanding circular portion 18 includes a plurality of separately protruded positioning plates 181 and installed at the bottom periphery of the expanding circular portion 18, and the positioning plate 181 is fixed onto the internal wall of the column body 12.

8. The directional thermal siphon type heat column 1 according to claim 1, wherein the partition element 26 has a bottom with a width slightly smaller than the internal diameter of the column body 12, and the partition element 26 includes a plurality of separately protruded positioning plates 181 installed at the bottom periphery of the partition element 26, and fixed onto the internal wall of the column body 12.

9. The directional thermal siphon type heat column 1 according to claim 5, further comprising a circulation space 263 defined between the middle tube 22, 50 an end and the lid 14, and another end of the middle tube 22, 50 being disposed at a bottom position inside the guided ascending portion 20, so that an appropriate distance from both ends of the middle tube 22, 50 to the base 10 and lid 14 respectively is maintained.

10. The directional thermal siphon type heat column 1 according to claim 1, wherein the column body 12 includes an accessory heat sink 60 installed on an external side of the column body 12, and the accessory heat sink 60 includes a plurality of heat dissipating fins 61 for dissipating heat from an external wall of the column body 12.

11. The directional thermal siphon type heat column 1 according to claim 4, wherein the middle tube 22, 50 is abutted and positioned between the base 10 and the lid 14, and the middle tube 22, 50 includes a plurality of penetrating holes 51 formed thereon.

12. The directional thermal siphon type heat column 1 according to claim 11, wherein the middle tube 50 includes a heat dissipating element 52 installed thereon, and the heat dissipating element 52 includes a plurality of heat dissipating fins 61 disposed around the heat dissipating element 52.

13. The directional thermal siphon type heat column 1 according to claim 4, wherein an appropriate distance from both ends of the middle tube 22, 50 to the base 10 and the lid 14 respectively is maintained, and the middle tube 22, 50 includes a plurality of heat dissipating fins 61, 521 installed under the partition element 26, and abutted against the internal wall of the column body 12 for supporting the partition element 26 to be fixed into the column body 12.
